(19) Europäisches Patentamt
European Patent Office
Office européen des brevets

(11) Veröffentlichungsnummer: **0 218 798**
**A2**

(12) **EUROPÄISCHE PATENTANMELDUNG**

(21) Anmeldenummer: **86108844.1**

(22) Anmeldetag: **28.06.86**

(51) Int. Cl.[4]: **C 23 F 11/167**
C 02 F 5/14

(30) Priorität: **25.07.85 DE 3526640**

(43) Veröffentlichungstag der Anmeldung:
**22.04.87 Patentblatt 87/17**

(84) Benannte Vertragsstaaten:
**AT BE CH DE FR GB IT LI LU NL SE**

(71) Anmelder: **Benckiser-Knapsack GmbH**
**Dr. Albert-Reimann-Strasse 2**
**D-6802 Ladenburg(DE)**

(72) Erfinder: **Wasel-Nielen, Joachim, Dr. Dipl.-chem.**
**Kurpfalzring 56**
**D-6830 Schwetzingen(DE)**

(72) Erfinder: **Fischer, Lysander**
**Hohwiesenstrasse 3**
**D-6909 Rauenberg(DE)**

(74) Vertreter: **Grussdorf, Jürgen, Dr. et al,**
**Patentanwälte Zellentin & Partner Rubensstrasse 30**
**D-6700 Ludwigshafen(DE)**

(54) **Verfahren und Zusammensetzung zur Verhinderung von Korrosionen und Steinbildungen in Brauchwassersystemen.**

(57) Die Erfindung betrifft ein Verfahren zur Verhinderung von Korrosionen und Steinausfällungen in Brauchwassersystemen, wobei man dem Brauchwasser Diethylentriaminpenta-(methylenphosphonsäure) in freier Form oder als Salz zusammen mit Phosphorsäureestern des Ethanolamins zusetzt sowie die neuen Mittel, welche in diesem Verfahren eingesetzt werden.

EP 0 218 798 A2

GEÄNDERT
siehe Titelseite

Korrosions- und Steinschutzmittel für Brauchwassersysteme

Die Erfindung betrifft den Zusatz von Diethylentriamin-penta-(methylenphosphonsäure) (DETAPMP) in Kombination mit Phosphorsäureestern des Ethanolamins (AP), gegebenenfalls mit weiteren verstärkend wirkenden Additiven wie z.B. anionischen Dispergiermitteln, Azolverbindungen und Zink, zum Korrosionsschutz und zur Verhinderung anorganischer Ablagerungen.

Zu den schwierig beherrschenden Brauchwassersystemen gehören die offenen Rückkühlsysteme, in denen das aufgewärmte Wasser durch Verdunstungskühlung zurückgekühlt wird: Der ständige Ersatz des verdunsteten und des abgeschlämmten Wassers (zur Kontrolle der Aufkonzentration der Wasserinhaltsstoffe) durch Frischwasser erfordert aus ökologischen und ökonomischen Gründen eine Dosierung von Konditionierungsmittel im ppm-Bereich. Die ständige weitgehende Sättigung mit Sauerstoff macht Behandlungskonzeptionen durch Sauerstoffabbindung wie im Kesselwasserbereich unmöglich. Durch die ständige Belüftung wird der Kohlensäuregehalt des Wassers vermindert, das Wasser reagiert alkalisch mit pH-Werten je nach Härte zwischen 8 und 9,5.

Stand der Technik ist es, anorganische Ablagerungen durch den Zusatz von Phosphonsäuren und anionischen Polymeren zu verhindern. Dies ist für die DETAPMP in der Patentschrift US P - 3 434 969 bzw. US P - 3 699 048 beschrieben. Auch der Zusatz von Phosphatestern der Alkanolamine als Steinschutz ist bekannt (s. US P 3 723 419). Weitere Verbindungsgruppen zur Bekämpfung von Ablagerungen und Versteinungen sind z.B. in dem Standardwerk H.-D. Held, Kühlwasser (Vulkanverlag Essen, 1984, S. 220 - 239) beschrieben.

Problematischer ist der kombinierte Stein- und Korrosionsschutz. Als Korrosionsinhibitoren in Kühlsystemen werden heute hauptsächlich Zinksalze (gegebenenfalls stabilisiert u.a. als Phosphonate) und anorganische Phosphate (ebenfalls gegebenenfalls stabilisiert mit entsprechend geeigneten Dispergiermitteln) verwendet.

Da sowohl Zink als auch Phosphate in Abhängigkeit von den übrigen Wasserinhaltsstoffen ihre volle Wirksamkeit bei pH-Werten oberhalb 8 verlieren, ist bei entsprechenden Voraussetzungen eine pH-Wert-Korrektur mit Mineralsäuren notwendig.

Zwar besitzen auch Phosphonsäuren und bestimmte Polyphosphorsäureester korrosionsinhibierende Eigenschaften, doch sind diese relativ schwach und erfordern bei ausgeprägter Problemstellung sehr unökonomische Dosierraten (oberhalb 50 ppm Wirksubstanz). Von der eigentlichen Inhibitorwirkung zu unterscheiden, ist die sekundäre Korrosionsinhibierung durch Verhinderung von Ablagerungen und damit der Korrosionen aufgrund von Belüftungselementbildung.

Azolverbindungen besitzen in erster Linie korrosionsinhibierende Eigenschaften bei Buntmetallen bzw. deren Legierungen. Nur in sehr hoher Anwendungskonzentration ist eine schwache inhibierende Wirkung auch auf Stahl feststellbar.

Zur Problematik und zum Stand der Technik der Korrosionsinhibierung siehe H.-D. Held, Kühlwasser (Vulkanverlag Essen, 1984, S. 258 - 296).

Ungelöst war bisher die Behandlung von Brauchwässern bei hohen pH-Werten oberhalb 8, in denen Sauerstoffkorrosion und Härteausscheidungen stattfinden, mit kombinierten Härtestabilisatoren und Korrosionsinhibitoren.

Überraschenderweise wurde gefunden, daß die Kombination der DETAPMP mit der allgemeinen Formel

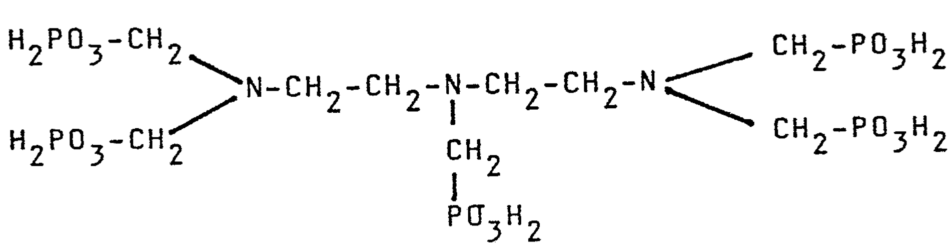

bzw. deren lösliche Salze mit den Phosphorsäureestern des Triethanolamins der allgemeinen Formel:

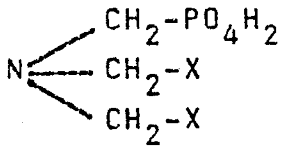 mit X = OH oder $-PO_4H_2$

folgende Vorteile auf sich vereint:

- Wirksamkeit auch bei geringer Dosierung,
- keine Folgeprobleme durch Calciumphosphatablagerungen bzw. -ausfällungen oder Zinkhydroxyd- bzw.-carbonatausfällungen,
- Wirkung auch bei komplizierten wasserchemischen Voraussetzungen wie hohe oder sehr niedrige Calciumgehalte und hohe Neutralsalzgehalte,
- Korrosionsinhibierung und Steinschutz auch bei hohen Wandtemperaturen bis knapp unterhalb des Siedepunktes.

In gewissen Fällen ist dabei die Kombination und der separate Zusatz weiterer bekannter Additive vor allem aus ökonomischen Gründen sinnvoll:

a) Bei Anwesenheit von Kupfer, Messing oder anderen Buntmetalllegierungen können die üblichen Buntmetallinhibitoren wie Toloyltriazol, 1,2,3-Benzotriazol oder Mercaptobenzthiazol eingesetzt werden.

b) Bei starker Belastung des Wassers mit dispergierfähigem Material empfiehlt sich der Zusatz von Polymeren wie Acrylaten, Methacrylaten und anderen Copolymerisaten bzw. deren Säureform im Molekulargewichtsbereich zwischen 1000 und 20000.

c) Bei sehr hohen Konzentrationen an Calciumionen können die ebenfalls unter b) genannten Additive und/oder bekannte Phosphon-Säuren bzw. deren Salze wie HEDP, PBTC, ATMP zusätzlich eingesetzt werden.

d) Bei extrem hohen Neutralsalzbelastungen können zusätzlich stabilisierte Zinksalze in Konzentrationen, die im Umlaufwasser 0,4 ppm als $Zn^{2+}$ nicht überschreiten, angewendet werden.

Die erfindungsgemäßen Wirkstoffgehalte bzw. -verhältnisse betragen je nach Aufgabenstellung bezüglich der Kombination DETAPMP: AP 1:10 bis 10:1. Bei der Kühlwasserbehandlung liegen die Wirksubstanzgehalte der Kombination zwischen 3 und 50 ppm im zu behandelnden Wasser, vorzugsweise zwischen 10 und 20 ppm. Bei der Autoklavenwasserbehandlung werden 3 - 100 ppm eingesetzt, vorzugsweise 30 - 50 ppm.

Den Vorteil der gefundenen Kombination belegen die folgenden Versuche:

Die Versuche wurden in Kreislaufsimulatoren durchgeführt, die so konstruiert sind, daß einerseits typische Umlaufzeiten und wasserchemische Bedingungen (3 - 4malige Umwälzung pro Std.) sowie andererseits in einem Bypass-Kreislauf die für aussagekräftige Korrosionsuntersuchungen notwendige Strömungsgeschwindigkeit von 1 m/sec. eingehalten wird.

Schemazeichnung der Versuchsanordnung: siehe Anlage 1

Die Versuche wurden mit drei verschiedenen Wässern durchgeführt:

| Wasser | A | B | C |
|---|---|---|---|
| pH-Wert | 9,5 | 7,4 | 7,0 |
| Ca-Gehalt (mg/l) | 40 | 100 | 146 |
| $KS_{4,2}$ (mmol/l) | 0,9 | 1,9 | 2,3 |
| Chloride (mg/l) | 60 | 224 | 134 |
| Sulfate (mg/l) | 40 | 188 | 99 |
| Leitfähigkeit (µS/cm) | 440 | 820 | 650 |

Bei dem Wasser A handelt es sich um ein kalkentkarbonisiertes Zusatzwasser mit relativ moderatem Neutralsalzgehalt.
Wasser B ist ein Flußwasser mit hoher Neutralsalzbelastung.
Wasser C ist ein entcarbonisiertes Brunnenwasser mit relativ hoher Calciumhärte.

Die Wässer wurden innerhalb von 2 Tagen 3fach eingedickt und dann 12 Tage unter konstanten Bedingungen gehalten. Es resultierten folgende Wasserzusammensetzungen:

| Wasser | A | B | C |
|---|---|---|---|
| pH-Wert | 8,6 | 8,2 | 7,6 |
| Chloride (mg/l) | 250 | 665 | 395 |
| Eindickung | 3 | 3 | 3 |
| Sulfate (mg/L) | 150 | 555 | 285 |
| Leitfähigkeit (µS/cm) | 1260 | 2280 | 1850 |

Calciumgehalte sowie Säurekapazitäten werden als Maß der Härtestabilisierung bei den jeweiligen Versuchsergebnissen genannt.

Die Korrosionsinhibierung wurde mittels Coupons, elektrochemischer Polarisations-Widerstandsmessung und optisch an Testwärmetauschern ermittelt.

Die Kühlzonenbreite betrug 15° C (36 - 51° C), die Temperaturdifferenz am Testwärmetauscher 1,5° C (49,5 - 51° C).

Versuchsergebnisse:

Es bedeuten in den anliegenden tabellarischen Aufstellungen der Ergebnisse:

$KS_{4,2}$: Säurekapazität bis pH-Wert 4,2 in mmol/l

Ca: Calciumgehalt im Wasser nach Abschluß der Versuche in mg/l

HSt: Stabilisierung in % $= \frac{Ca \cdot 100}{\text{Calciumgehalt des Zusatzw. x Eindickung}}$

KRC: Korrosionsrate in mm/a an gesandstrahlten Coupons aus ST 37

KRI: Korrosionsinhibierung in % $= \frac{KRC \cdot 100}{\text{KRC des Blindwertes} - KRC}$

KRP: Korrosionsrate am Ende des jeweiligen Versuches, mittels Polarisations-Widerstandsmessung ermittelt, in mm/a.

TWT: Optische Beurteilung des dampfbeheizten, innendurchflossenen Testwärmetauscherrohres aus ST 37, Wand-Temperatur bis 95° C.

Beurteilungskriterium sehr gut (= 1) bis sehr schlecht (= 10).

B = Belagsbildung
R = Rostbildung
P = Passivschicht
L = deutliche lokale Korrosion
F = deutliche Abnahme der Rohrwandstärke.

VD: Versuchsdauer in Tagen. Sind weniger als 14 Tage angegeben, wurde der Versuch aufgrund zu hoher Korrosionsproduktbelastung des Wassers (Gesamteisengehalte oberhalb 5 mg/l) abgebrochen.

Die Gewichtsangaben für die eingesetzten Additive beziehen sich immer auf die Wirkstoffgehalte im Umlaufwasser (mg/l).

Es bedeuten:

DETAPMP: Diethylentriamin-penta-(methylenphosphonsäure)
PBTC: Phosphonobutan-tricarbonsäure
HEDP: Hydroxyethandiphosphonsäure
TAP: Phosphorsäureester des Triethanolamins, techn.
PAA: Polyacrylsäure
PMAA: Polymethacrylsäure
TT: Toloyltriazol
Zn: $Zn^{2+}$ aus Zinkchlorid
PP: hochkondensiertes lösliches Polyphosphat als $P_2O_5$

Die Versuchsergebnisse sind für die Wässer A - C in den Anlagen 2 - 4 aufgeführt.

Die überraschenderweise vorteilhaft wirkende erfindungsgemäße Kombination verfügt über ein breites Anwendungsspektrum bei der Brauchwasserbehandlung. Überall dort, wo mit geringen Konzentrationen an Inhibitoren Korrosions- und Steinschutz erzielt werden muß, ist der Einsatz möglich. Bevorzugt ist der Einsatz in offenen Rückkühlsystemen, auch unter bisher als ungünstig angesehenen Voraussetzungen (Stahlwärmetauscher mit hohen Wandtemperaturen, hohe Neutralsalzgehalte, hohe pH-Werte und/oder hohe Härten( und bei der Autoklavenwasserbehandlung (zusätzlich hoher Druck).

Versuche mit Wasser A

| Nr. | Additive mg/l | $KS_{4,3}$ mmol | Ca mg/l | HST % | KPC mm/a | KRC % | KRP mm/a | TWT | VD |
|---|---|---|---|---|---|---|---|---|---|
| 1 | 0 | 1,50 | 92 | 76,6 | 0,9[illegible] | 0 | 0,762 | 9 R,L,E | [illegible] |
| 2 | 20 PBTC | 2,50 | 99 | 82,5 | 0,825 | 1[illegible],[illegible] | 0,635 | 8 R,B,L | [illegible] |
| 3 | 20 DETAPMP | 2,65 | 102 | 85,0 | 0,425 | 5[illegible],[illegible] | 0,315 | 5 B,L | 1[illegible] |
| 4 | 20 TAP | 1,60 | 93 | 77,5 | 0,510 | 4[illegible],5 | 0,428 | 6 E,R | 3 |
| 5 | 10 PBTC<br>10 TAP | 2,45 | 99 | 82,5 | 0,285 | 71,2 | 0,195 | 4 L,R | 11 |
| 6 | 10 DETAPMP<br>10 TAP | 2,60 | 113 | 96,2 | 0,159 | 83,3 | 0,105 | 3 P,S | 14 |
| 7 | 10 DETAPMP<br>7 TAP<br>3 PMAS | 1,95 | 115 | 95,8 | 0,112 | 83,2 | 0,098 | 2 P,S | 24 |
| 8 | 5 DETAPMP<br>5 HEDP<br>5 TAP<br>5 PAA | 1,90 | 112 | 93,[illegible] | 0,[illegible]13 | 77,6 | 0,175 | 5 R,L,E | 22 |
| 9 | 5 DETAPMP<br>5 TAP<br>5 PMAA | 2,00 | 116 | 95,[illegible] | 0,104 | 89,0 | 0,075 | 2 S | [illegible] |
| 10 | 15 PBTC<br>15 HEDP<br>15 PMAA | 2,25 | 109 | 92,8 | 0,[illegible]73 | 60,7 | 0,295 | 7 R,L,E | [illegible] |
| 11 | 10 DETAPMP<br>15 TAP<br>10 PMAA<br>0,5 TT | 2,6 | 118 | 95,7 | 0,[illegible]1 | 92,5 | 0,050 | 1 S | [illegible]4 |
| 12 | 10 PBTC<br>0,5 Zn<br>5 PMAA | 2,05 | 106 | 88,3 | 0,2[illegible]5 | [illegible]1,0 | 0,210 | 4 E,L,R | [illegible] |
| 13 | 10 DETAPMP<br>0,5 Zn<br>10 PMAA<br>0,5 TT | 2,10 | 108 | 90,3 | 0,105 | [illegible]5,6 | 0,100 | 3 S,B,R | 14 |
| 14 | 10 P[illegible]<br>10 PBTC | 2,45 | 100 | 85,3 | 0,2[illegible] | [illegible]9,3 | 0,215 | 5 B,L | 10 |

Versuche mit Wasser B

| Nr. | Additive mg/l | $KS_{4,3}$ mmol | Ca mg/l | HST % | KRC mm/a | KRI % | KRP mm/a | TWT | VD |
|---|---|---|---|---|---|---|---|---|---|
| 1 | 0 | 3,60 | 190 | 63,3 | 0,630 | 0 | 0,575 | 10 R,L,F | 10 |
| 2 | 20 PBTC | 4,75 | 253 | 84,3 | 0,496 | 21,3 | 0,415 | 9 R,L | 8 |
| 3 | 20 DETAPMP | 5,05 | 270 | 90,0 | 0,241 | 61,7 | 0,211 | 7 B,L | 10 |
| 4 | 20 TAP | 3,85 | 200 | 66,7 | 0,306 | 51,4 | 0,265 | 7 B,L | 8 |
| 5 | 10 PB/TC<br>10 TAP | 4,75 | 261 | 87,0 | 0,145 | 76,9 | 0,100 | 5 L,R | 10 |
| 6 | 10 DETAPMP<br>10 TAP | 5,15 | 276 | 92,0 | 0,066 | 89,5 | 0,052 | 2 S | 14 |
| 7 | 10 DETAPMP<br>7 TAP<br>3 PMAS | 5,30 | 283 | 94,3 | 0,050 | 92,1 | 0,045 | 2 S | 14 |
| 8 | 5 DETAPMP<br>5 HEDP<br>5 TAP<br>5 PAA | 4,95 | 272 | 90,7 | 0,130 | 79,3 | 0,101 | 4 R,L,B | 12 |
| 9 | 5 DETAPMP<br>5 TAP<br>5 PMAA | 5,54 | 285 | 95,0 | 0,063 | 90,0 | 0,051 | 2 P,S | 14 |
| 10 | 15 PBTC<br>15 HEDP<br>15 PMAA | 5,00 | 265 | 88,3 | 0,219 | 65,2 | 0,0178 | 6 R,L,B | 10 |
| 11 | 10 DETAPMP<br>15 TAP<br>10 PMAA<br>0,5 TT | 5,60 | 289 | 96,3 | 0,030 | 95,2 | 0,025 | 1 S | 14 |
| 12 | 10 PBTC<br>0,5 Zn<br>5 PMAA | 4,15 | 256 | 85,3 | 0,156 | 75,2 | 0,127 | 4 B,L | 14 |
| 13 | 10 DETAPMP<br>0,5 Zn<br>10 PMAA<br>0,5 TT | 5,00 | 266 | 88,7 | 0,125 | 80,1 | 0,100 | 3 B,L | 14 |
| 14 | 10 PP<br>10 PBTC | 4,75 | 244 | 81,3 | 0,171 | 72,9 | 0,145 | 4 B,L | 14 |

Versuche mit Wasser C

| Nr. | Additive mg/l | $KS_{4,3}$ mmol | Ca mg/l | HST % | KRC mm/a | KRI % | KFP mm/a | TWT | VD |
|---|---|---|---|---|---|---|---|---|---|
| 1 | 0 | 3,70 | 239 | 54,6 | 0,455 | 0 | 0,415 | 3 R,L,F | 10 |
| 2 | 20 PBTC | 4,25 | 334 | 80,8 | 0,343 | 27,6 | 0,312 | 7 R,L,B | 10 |
| 3 | 20 DETAPMP | 5,55 | 393 | 89,0 | 0,151 | 66,8 | 0,132 | 6 B,L | 14 |
| 4 | 20 TAP | 3,95 | 251 | 57,3 | 0,194 | 57,3 | 0,145 | 5 B,L | 14 |
| 5 | 10 PB/TC<br>10 TAP | 4,45 | 374 | 85,4 | 0,121 | 73,4 | 0,101 | 4 B,R,L | 14 |
| 6 | 10 DETAPMP<br>10 TAP | 5,56 | 398 | 90,9 | 0,063 | 86,1 | 0,055 | [illegible] S | 14 |
| 7 | 10 DETAPMP<br>7 TAP<br>3 PMAS | 6,35 | 404 | 92,2 | 0,029 | 93,5 | 0,015 | [illegible] S | 14 |
| 8 | 5 DETAPMP<br>5 HEDP<br>5 TAP<br>5 PAA | 5,15 | 388 | 88,6 | 0,084 | 81,6 | 0,075 | 3 R,B | 14 |
| 9 | 5 DETAPMP<br>5 TAP<br>5 PMAA | 6,00 | 408 | 93,1 | 0,036 | 92,0 | 0,010 | 1 S | 14 |
| 10 | 15 PBTC<br>15 HEDP<br>15 PMAA | 4,90 | 378 | 86,3 | 0,144 | 68,4 | 0,101 | 5 R,L,B | 14 |
| 11 | 10 DETAPMP<br>15 TAP<br>10 PMAA<br>0,5 TT | 6,55 | 415 | 94,7 | 0,007 | 98,5 | 0,005 | 1 S | 14 |
| 12 | 10 PBTC<br>0,5 Zn<br>5 PMAA | 4,25 | 359 | 82,0 | 0,117 | 74,3 | 0,095 | 4 B,R | 14 |
| 13 | 10 DETAPMP<br>0,5 Zn<br>10 PMAA<br>0,5 TT | 4,90 | 373 | 85,1 | 0,074 | 83,7 | 0,055 | [illegible] B,L | 14 |
| 14 | 10 PF<br>10 PBTC | 4,65 | 343 | 78,3 | 0,134 | 70,5 | 0,115 | 5 B,L | 14 |

# P a t e n t a n s p r ü c h e

1.) Verfahren zur Verhinderung von Korrosionen und Steinausfällungen in Brauchwassersystemen, dadurch gekennzeichnet, daß man dem Brauchwasser Diethylentriamin-penta-(methylenphosphonsäure) in freier Form oder als Salz zusammen mit Phosphorsäureestern des Ethanolamins zusetzt.

2.) Verfahren nach Anspruch 1, dadurch gekennzeichnet, daß das Verhältnis von Phosphonsäure zu Ester wie 1 : 10 bis 10 : 1 beträgt.

3.) Verfahren nach Anspruch 1 bis 2, dadurch gekennzeichnet, daß man dem Brauchwasser die Wirkstoffkombination in Mengen von 3 bis 100 mg/l (bezogen auf den Wirkstoffgehalt) zusetzt.

4.) Verfahren nach Anspruch 1 bis 3, dadurch gekennzeichnet, daß als Ester Triethanolaminphosphorsäureester eingesetzt wird.

5.) Verfahren nach Anspruch 1 bis 4, dadurch gekennzeichnet, daß man die Wirkstoffkombination zusammen mit anderen bekannten Wirkstoffen, wie Phosphonate anderer Zusammensetzung, Polyacrylate, Polymethacrylate, Polyacrylamide und andere Copolymere bzw. deren freie Säuren ebenso wie Chromate, Zink, Phosphate, Azole einsetzt.

6.) Verfahren nach Anspruch 1 bis 4, dadurch gekennzeichnet, daß man die Behandlung in alkalischen Wässern durchführt.

7.) Mittel zur Verhinderung von Korrosionen und Steinbildungen in Brauchwassersystemen auf Basis von Diethylentriamin-penta-(methylenphosphonsäure), gekennzeichnet durch einen Gehalt an einem oder mehreren Phosphorsäureestern des Ethanolamins.

8.) Mittel nach Anspruch 7, dadurch gekennzeichnet, daß das Verhältnis von Phosphonsäure zu Ester wie 1 : 10 bis 10 : 1 beträgt.

9.) Mittel nach Anspruch 7 bis 8, gekennzeichnet durch einen Gehalt an Triethanolaminphosphorsäureester.

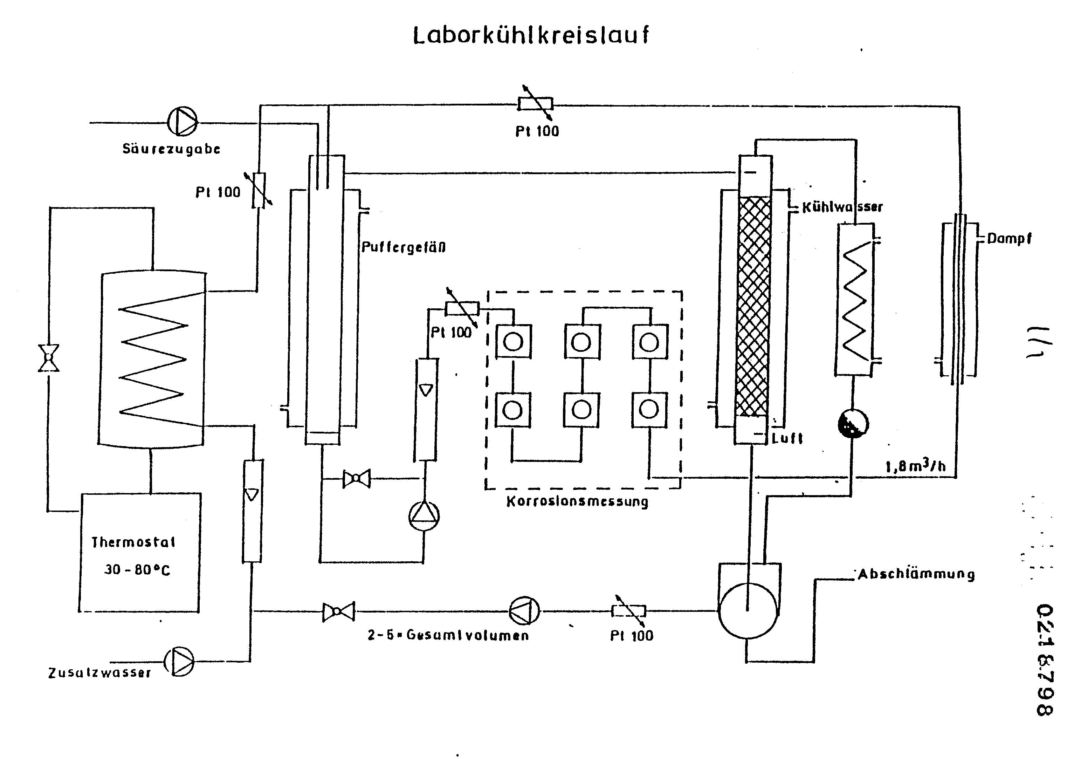

10.) Mittel nach Anspruch 7 bis 9, dadurch gekennzeichnet, daß es zusätzlich eine oder mehrere der Substanzen Phosphonate, Polyacrylate, Polymethacrylate, Polyacrylamide und andere Copolymere bzw. deren freie Säuren ebenso wie Chromate, Zink, Phosphate, Azole enthält.

# Laborkühlkreislauf